# EUROPEAN PATENT SPECIFICATION

(11) **EP 4 131 105 B1**
(45) Date of publication and mention of the grant of the patent: **26.08.2026**
(21) Application number: 22198162.4
(22) Date of filing: 26.11.2009
(51) Int. Cl.: G06Q 10/08

(54) **MOBILE TAG LOCAL DATA REPORTING SYSTEM**
SYSTEM ZUR MELDUNG VON LOKALEN DATEN MIT MOBILEN ETIKETTEN
SYSTÈME DE RAPPORT DE DONNÉES LOCAL D'ÉTIQUETTE MOBILE

(30) Priority: 04.12.2008 US 328206
(43) Date of publication of application: 08.02.2023
(62) Document number(s) of the earlier application(s) in accordance with Art. 76 EPC: 09829908.4 / 2 353 306
(73) Proprietor: Malikie Innovations Limited, Dun Laoghaire, Dublin A96 VR66 (IE)
(72) Inventor: STEER, David, Waterloo, ON N2K 0A7 (CA)
(74) Representative: Murgitroyd & Company

(56) References cited:
- US-A- 5 008 661
- US-A1- 2004 066 278
- US-A1- 2005 057 344
- US-A1- 2007 127 421
- US-A1- 2008 090 523

## Description

### TECHNICAL FIELD

The present disclosure relates generally to radio frequency communications, and more particularly to a mobile tag local data reporting system.

### BACKGROUND

Conventional methods of identifying containers with hazardous cargo involve the use of cards or placards placed on the outside of the container or vehicle. These cards usually display a number indicating an internationally recognized identification system for the cargo. If the cargo is involved in an incident during transportation, the response teams are expected to read the placard and look up the number in a database or book to learn the nature of the material involved. This process has two problems. First, the placard may not always be readily visible at an incident site as the placards may become detached or obscured by debris. Secondly, the placards also give no idea of the volume of the cargo contents or the condition of the cargo, such as temperature, pressure, etc. A further problem is that, while the placards are intended to help shippers and emergency response teams in the handling of the cargo, the placards also advertise to others the dangerous nature of the cargo, which is a security concern as the dangerous cargo may be attacked to cause a deliberate disaster.

It would be advantageous to have a means to quickly identify the cargo, including its current conditions and relevant safety procedures, without enabling outside parties to view the placard or advertisement of the contents and without requiring emergency response personnel to contact distant databases or consult books.
US2005/0057344 discloses a method for transmitting a hazardous material alert for use with a vehicle that is transporting hazardous material. The method comprises detecting a hazard event, and transmitting the hazardous material alert in response to the hazard event, wherein the hazardous material alert includes information relating to the hazardous material.
Patent documents US 5 008 661 A, US 2008/090523 A1, US 2004/066278 A1, US 2007/127421 A1 are representative of the available art.

### SUMMARY

The invention is set out in the appended set of claims.

The present disclosure seeks to enable speedy access to information about hazardous materials by emergency response teams that may be involved in an accident or upset. A tracking tag on the container or transportation vehicle stores information about the cargo, its dangers and its proper handling in the event of an upset. This information is made available from the tag to the emergency response team using local on-site radio communications equipment.
The response team may immediately be able to access safety information about the materials involved without the delays needed to contact other remote databases using wide area communications networks. The cargo containers may further be fitted with monitoring sensors for parameters such as pressure and temperature. Communication of this current cargo condition information may also help the response team to evaluate immediate danger and to take necessary precautions. Currently, such information about the nature and condition of the cargo is unavailable at the scene of an incident and this makes the proper response more time consuming as the responders await information to come from distant databases.

One aspect of the present application provides a mobile tag tracking system according to claim 1.

Another aspect of the present application provides a method according to claim 12.

### BRIEF DESCRIPTION OF THE DRAWINGS

Reference will now be made to the drawings, which show by way of example, embodiments of the present disclosure, and in which:
FIG. 1 shows in block diagram form a mobile tag tracking system in accordance with one embodiment;
FIG. 2 shows in block diagram form a tag for use with the mobile tag tracking system of FIG. 1 in accordance with one embodiment; and
FIG. 3 shows in flow chart form a process showing the possible states of the container cargo tag for the enablement of local communications in accordance with one embodiment.

It will be noted that throughout the appended drawings, like features are identified by like reference numerals.

### DETAILED DESCRIPTION

This present disclosure provides a method and apparatus by which shipping containers or trucks or railway freight cars that are used for transport of hazardous materials can store information, such as safety precautions, about their contents and can communicate this information directly with emergency response teams in the event of an upset or other emergency involving the shipment and its contents. The emergency responders, for example, may be able to receive emergency safety procedures and cargo conditions directly from the affected container rather than awaiting answers from distant data services for information. Information may also be provided on surrounding (e.g., perhaps undamaged) shipments to help assess the potential future impact of a fire or leak from the damaged shipment. The timely availability of this information may enable the response teams to more quickly and accurately take effective protective measures to contain and correct the incident. In embodiments provided herein, a group of containers may communicate amongst each other, for example in an ad-hoc network, to both relay information from containers blocked from external communications and to inform each other of possible hazardous conditions. The condition of the transportation vehicles, such as railway freight cars or tractor trailers, may also be monitored and the operators informed of the conditions of the vehicles or their cargos, for example using synthetic voice messages.

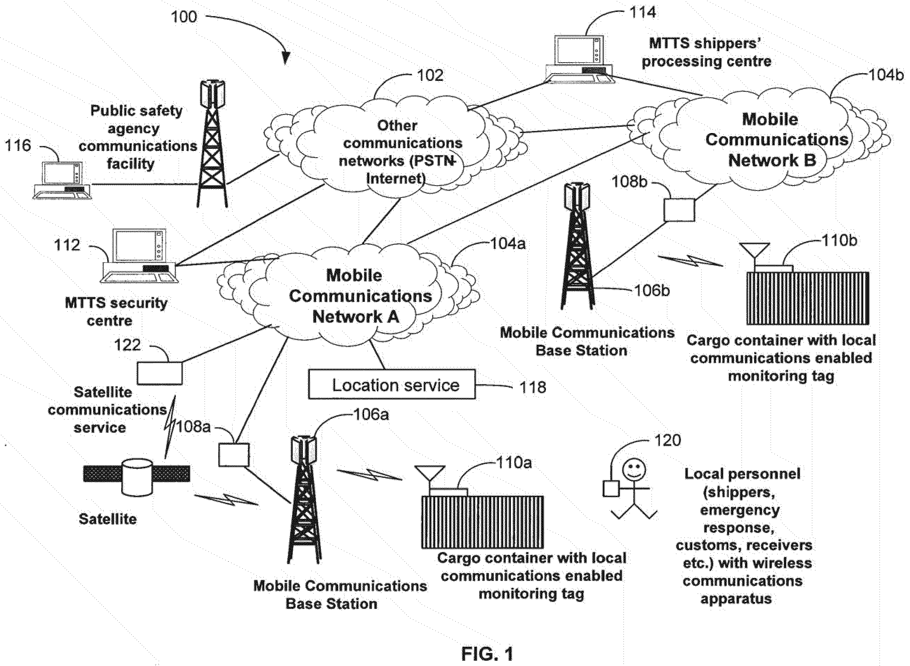

Referring to FIG. 1, a block diagram is shown illustrating a mobile tag tracking system (MTTS) 100 in accordance with one embodiment. Specifically, FIG. 1 illustrates a communications system of the MTTS 100. The MTTS 100 may include fixed communications networks such as the communications network 102, which in one example may be a public switched telephone network (PSTN) or the Internet. The MTTS 100 may also include mobile communications networks 104a and 104b, with associated mobile radio base-stations 106a and 106b and their associated controllers 108a and 108b, which may collectively provide mobile communications coverage over the path of a tag and its associated protected object. The tags and associated objects are indicated with reference 110, indicated individually as 110a and 110b. The mobile communications coverage may include one or more systems such as GSM, CDMA, LTE, public safety agency systems (PSA), private mobile radio networks (PMR), and/or satellite systems indicated by reference 122. These systems are arranged to enable communications with the tags 110 and its associated protected objects and a MTTS security centre 112. There may be other associated centres, such as a shipper's processing facility 114 and the public safety communications and control centres 116. These facilities 114 and 116 may be separate facilities or may be combined into common facilities and may make use of public or private communications networks and facilities.

A location service 118 may also be provided to assist the tags 110, the security centre 112, and the processing centre 114 in determining the locations of the tags 110. Although the tags 110 may include, for example, GPS receivers for providing location information, this may be supplemented with additional information, such as mapping and traffic flow information, provided by the location service 118. Various personnel such as customs agents, shippers, receivers, and emergency response teams may also communicate with the tags 110 and its associated objects using a wireless communications apparatus 120. The communications between the apparatus 120 and the tags 110 may be either direct communications between the apparatus 120 and the tags 110 or routed via the supporting networks and the mobile communications channels.

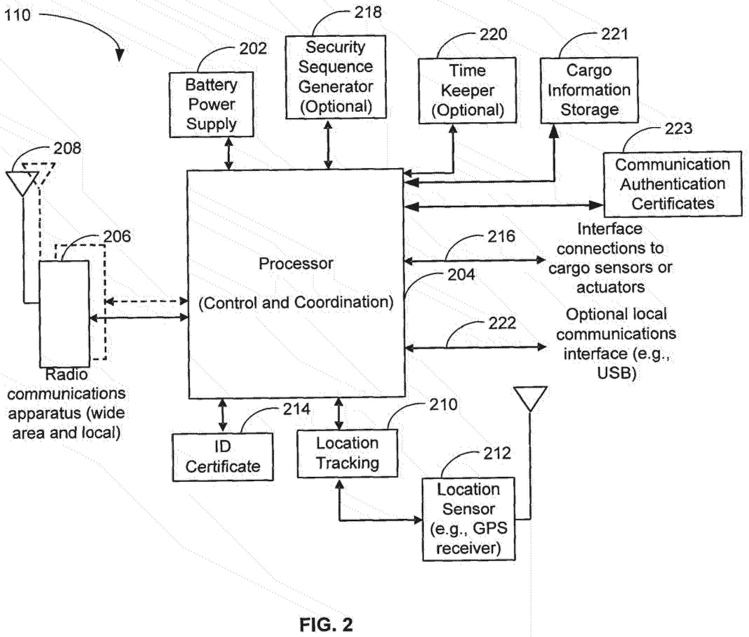

Referring to FIG. 2, a block diagram is shown illustrating a tag 110 for use with the mobile tag tracking system 100 of FIG. 1 in accordance with one embodiment. FIG. 2 further illustrates the functions contained in the tag 110 and the interrelationships among these functions. The tag 110 typically includes a battery power supply unit 202 that powers the tag 110. The tag 110 is equipped with a means to recharge or replace the battery 202 and a means to monitor the condition of the battery 202, which is controlled or coordinated by a processor 204. The tag 110 further includes radio communications apparatus 206 and the associated antennas 208. The tag 110 may have more than one radio communications capability (e.g., GSM, LTE, VHF radio, PMR/PSA, WiFi, "Blue-Tooth", and/or Satellite communications), which may facilitate either wide area or local area communications such as WLAN, or both. These facilities are used under the direction of the control or coordination of the processor 204 for communications via the communications networks 102 and 104 (FIG. 1) to the security centre 112 and the shipper's processing centre 114. In one example, standard communications network protocols may be used or yet to be developed protocols may also be used. The tag 110 may communicate directly with the communications network infrastructure (e.g., via GSM, VHF or satellite radios) or via a multi-hopped link that may utilize the resources of other tags 110 that may be nearby but have better communications paths to the security centre 112 (e.g., using "ad-hoc" or "mesh" or "multi-hop" connectivity such as, for example, the IEEE 802.16j or the IEEE 802.11s standards).

Facilities are also provided for location measurement and tracking, indicated by reference 210, that may include, for example a GPS receiver 212 and associated processing capability. The location tracking component 210 provides a location signal to the processor having information allowing the processor to determine the location of the tag 110. An authentication or security capability may be provided by an electronic credential provided by an ID certificate and authentication component 214 that implements a process so that the tag 110 may be authenticated to the security server 112 and the server 112 may be authenticated to the tag 110. The tag 110 may also be able to authenticate and be authenticated by local devices such as might be used by public safety response personnel or customs inspection agents, using communication authentication certificates 223, as described below. The identification and authentication process may make use of additional processing capabilities in the control processor 204. The tag 110 further includes an interface means 216 for connection to external cargo sensors or actuators, for example to detect tampering with the protected object or the cargo's condition (e.g. temperature or pressure). The tag may further include an optional security sequence generator 218, such as a pseudo random binary sequence (PRBS) generator, that is compatible with the security centre 112 and may be synchronized with the security centre 112. Time and security sequence synchronization may be established and maintained between the tag 110 and the MTTS security centre 112 using an optional time keeping apparatus 220, such as a clock. The tag 110 may further have a memory allocated for storing cargo information, indicated by reference 221, that relates, for example, to the cargo being stored in a container that the tag 110 is attached to. The cargo information storage 221 may be used to store information about the cargo and related safety handling procedures for the cargo. These various means and functionalities described above may be implemented as either processes executed by the control processor 204 of the tag 110 and stored in an associated memory (not shown), or as discrete components connected to the processor 204.

The communications of the tag 110 may be organized to report at: (a) predefined intervals; (b) upon detecting a change in location; (c) in response to queries from the security centre 112 or the processing centre 114; or (d) to report in the event of an alarm condition being detected by the tag 110, such as tampering, an upset, the tag being off-course, etc. The tag 110 may be enabled to monitor the health of the tag 110 and report faults such as low battery conditions or blocked radio links. The tag 110 and the associated protected object may also contain local wired interfaces, indicated by reference 222 (e.g., a Universal Serial Bus (USB) connection) for local communication, software updating or loading of information using locally attached devices. Further, the tag 110 may have, stored in a memory allocation of the tag 110, the communication authentication certificates 223. The communication authentication certificates may be used, for example, to authenticate local emergency response personnel to communicate with the response personnel using a wireless communications apparatus 120 through any of the communications interfaces of the tag 110. The authentication certificates may be stored for authentication of local devices to enable access to the tag information through the local access radio.

The protected object, typically a vehicle or shipping container, which interfaces with the tag 110 using the interface connections 216 may contain sensors to detect tampering. Tampering may be detected based on any number of measured variables such as a door opening, a pressure reduction, gas detection such as CO₂, temperature increases or decreases, excessive g-forces or acceleration measurements, or unusual or unexpected location data provided by, for example, the GPS receiver 212. The protected object may also include actuators and/or sensors that may be activated automatically or by the associated tag 110 such as door locks, fire suppressants, access valves, pressure relief valves, floatation devices, audio alarms or olfactory deterrents. These actuators may be connected to the communications tag 110 through the interface connections 216. These actuators may be activated under the control of the processor 204, for example at the request of processes at the MTTS security centre 112 or the shipper's control processing centre 114 or by authenticated local emergency response personnel responding to an incident.

While the tag 110 and the protected object are typically separate items, the tag 110 and the protected object may be combined into a single entity. While the tag 110 may be thought of as a communications and monitoring device attached to a vehicle, shipping container or vehicle in which goods are transported, the tag 110 itself in the form of its memory or packaging may also be the conveyor of information (e.g., a tag 110 integrated with a USB memory key) or physical container including the tag 110 for small items of value needing secure transport.

The MTTS security monitoring centre 112 may be implemented as a server (e.g., a computer with a processor, memory, communications I/O, operating system, and security application software as known by those skilled in the art) attached to a communications network or otherwise attached to a network such that the server may send and receive communications with the mobile tag 110. The security monitoring centre 112 may communicate with and supervise multiple tags 110. The centre 112 includes methods of timekeeping that may be synchronized with the tag clocks 220, means to authenticate the tag 110 and to be authenticated by the tag 110, and to authenticate the messages or transmissions sent by the tags 110. A means is also provided for the security sequence generator that is compatible with the tag's generator 218 and can be synchronized with the tag's generator 218. The security monitoring centre 112 also includes processing capability, communications capability and memory for maintaining the status of tags 110, communicating with the tags 110, and detecting breeches to the security of the tags 110 and the associated objects. The security monitoring center 112 may also communicate with other entities such as the shippers' processing centre 114 or an emergency response centre or local emergency responders.

The MTTS shippers' processing centre 114 may be used by the shippers, or others such as the consignees, carriers, insurance carriers, vehicle owners or transportation regulators and safety agencies, to monitor the status of the container and vehicle during its journeys. The centres 114 may also set the state (e.g., loading, empty, travelling, unloading, etc.) of a container and its tag 110 while in use.

The security centre 112 and any associated shippers' processing centre 114 may be implemented as servers (e.g., computers with associated memory, communications apparatus and service processing algorithms) connected to the communications network.

When cargo is loaded in the container associated with the tag 110, information concerning the cargo may also be stored within the associated tag 110. This information may include the international cargo commodity code, the size of the cargo, such as weight, volume, or concentration, a description of any hazardous properties or its non-hazardous nature if it is benign, as well as information on the doors, valves and safety appliances associated with the shipping container. The tag 110 may also store an electronic copy of a material safety data sheet (MSDS) or relevant safety treatment information that may be of help to a response team in the event of an incident involving the container, such as appropriate fire suppression techniques, explosive suppression, inhalation hazards and first-aid treatments. The tag 110 may also store the identification number of the cargo container that may be affixed to its surface as well as information about the shipper, the transportation carrier and the consignee.

The cargo information may be protected from access through the communications interfaces for privacy concerns. In one example, only users with the appropriate credentials are able to access the files stored in the tag 110 (e.g., the cargo information stored in the cargo information storage 221) and learn the nature of the contents of the cargo. These credentials may be in the form of electronic keys and/or passwords that establish the enquirer's rights to access the information. These electronic keys and/or passwords may be stored as the communication authentication certificates 223. These credentials may be established at the time the cargo is loaded based on the planned journey route and may include, for example, the multiple various emergency response teams that may need to attend to the cargo along the route of its journey. General credentials may also be stored that allow national or regional response teams, such as police or the transportation carrier, to access the information wherever it is located. The cargo information may be write-protected such that the information can be read, but cannot be altered except during loading or unloading of the container. This may be necessary in some situations to prevent the information about the nature of the contents being altered after loading during its journey (e.g., to prevent a hazardous material being re-labelled as benign).

If during its journey the tag 110 detects a predefined condition such as a fault (e.g., a leak, upset, pilfering, excess temperature, off-route path or another anomaly), then, in addition to signalling an alarm to the shipper's processing centre 114, the tag 110 may enable a local communications mode. The local communications mode may allow incident response teams to communicate directly with the tag 110, once their credentials are verified, and access the cargo safety information material stored in the cargo information storage unit 221. The local communications may also enable the response teams to access current conditions of the cargo including, for example, its temperature or pressure. This direct access to the cargo information may enable the response teams to provide a speedy and appropriate response to the materials involved in the incident. This local communications may also enable the response teams to, for example, determine which containers are whole and which are breached and so concentrate on the most urgent spills. When using the local communications mode, there is typically no waiting for information from distant servers or for distant authorizations, allowing the appropriate teams to be quickly dispatched to the scene and valuable time is not wasted puzzling over the nature of the cargo. The local communications also permits access to information about the cargo even if the safety placard or the container number are not visible or have been lost in the upset.

In one example, the tag 110 may enter the local communication mode unilaterally in response to a predefined condition such as in the event of an upset or other serious alarm condition. In another example, the tag 110 may be enabled to enter the local communications mode through communications and authorization from its security centre 112. Under some conditions the tag 110 may be switched into the local communications mode upon receipt of authorized signals from local response teams or their networks. This may involve authentication of the response team communications using a prearranged protocol. Additional communications with cargo containers may be used, for example, to enquire about cargos that may be currently undamaged, and hence not presently in their alarm state, but which are in proximity to danger from other breached cargos at the scene of an incident. It may generally be undesirable for the tag 110 to have its local communications mode enabled at all times in order to conserve battery power of the battery 202 in the tag 110.

In some conditions, the tags 110 and associated containers in a train or other vessel such as a sea-going ship may communicate among themselves in an ad-hoc network to ensure that there are no adjacent hazardous cargos and to enable communication to the outside through the ad-hoc links while some parts of the train or vessel may be enclosed, for example, in tunnels. Using this model, access to more than one tag 110 may be enabled to the wireless communications apparatus 120 through a single connection. The tags 110 may also communicate with the train locomotive or vessel and signal of anomalies or an upset and warn the train driver or vessel captain of potential problems. The tags 110 may also be applied to railway cars themselves to monitor their vehicle condition and report alarms when needed, such as an upset, track conditions, brake status, coupler forces, wheel conditions, etc., to the train driver.

In the event of an upset, the tag 110 may be arranged to send an alarm message on a local public safety agency (PSA) channel to alert local response teams of the alarm condition of the container. This message may be transmitted as a packet-data message or as a synthetic voice transmission on the PMR/PSA channel. The message may contain one or more of the nature of the alarm (e.g., a breech, upset, leak, fire, etc.), the contents of the container, and the location of the container and associated tag 110. The channels to use for this communication may be programmed into the tag 110 at journey set-up time as part of the sequence of journey segments. The channel selection may also be from a pre-stored data-base using the geographic location of the tag 110 and associated container or the tag 110 may be primed with the appropriate channels from the tag's security centre 112. This information may be sent to the tag 110, for example, over the communications networks 102 or 104 either at journey setup time or during the journey of the tag 110 or in response to an upset incident. Before using the PSA channels, the tag 110 may monitor local conditions for confirmation that the local channel is free and available. To avoid cluttering a channel with multiple alarms, the tag 110 may monitor the channel for a voice response or tone signalling that could cause it to repeat the alarm message, in case it was only partially understood, or to cease sending messages. As there may be multiple tags 110 working the same channel at the same time due to multiple upsets at an incident, a form of directed control may be used. In these cases, it may be simplest to allow each tag 110 to announce its alarm once unless the tag 110 is triggered to repeat communication by a command received from its security centre 112 or the shipper's processing center 114. Alternatively, the tags 110 may communicate in the ad-hoc fashion to prepare a single broadcast containing information from all of the affected tags 110.

The tag 110 may also monitor local traffic (e.g., via tag mesh) and report on conditions of other nearby tags. An ensemble of tags 110 on a particular container may also communicate with the tag 110 on the transport vehicle, such as a tractor cab, or other portions of the transportation vehicle such as a train or railway locomotive. In the event of major upset, the collective response of the tags 110 may be used to communicate the extent of the disaster individually or collectively through the vehicle tag.

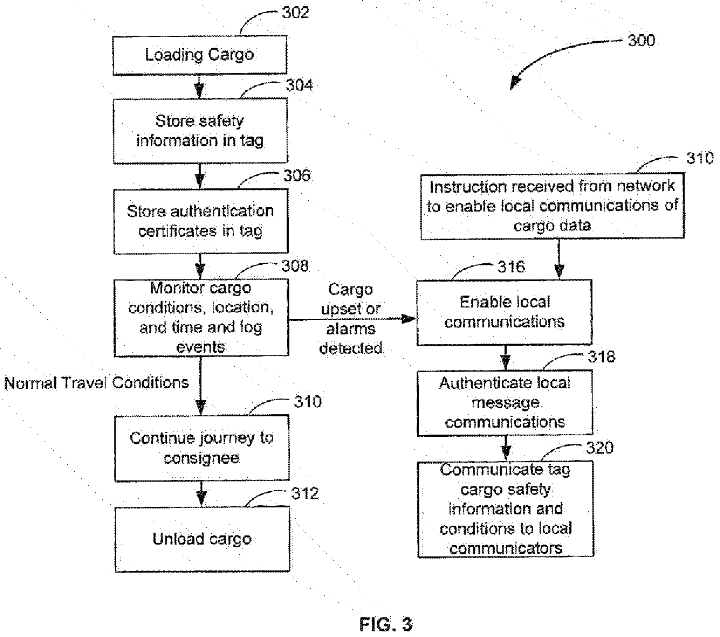

Referring to FIG. 3, a flow chart is shown illustrating a process 300 showing the possible states of the container cargo tag 110 for the enablement of local communications, in accordance with one embodiment. At a first state 302, cargo is loaded into a container that is associated with a tag 110. Typically, the tag 110 is physically attached to the container in which the cargo is loaded. Next, at a state 304, safety information related to the cargo that is loaded into the container is loaded into the tag 110, for example using either the local communications interface 222 or wide or local area networks 102, 104 through radio communications 206, and saved in the cargo information storage space 221. Next, at a state 306, authentication certificates are stored in the tag 110, for example as communication authentication certificates 223. The selection of appropriate communication authentication certificates for the journey of the tag 110 was previously described, above. Next, at a state 308, the cargo and associated tag 110 begin the journey and ongoing monitoring of cargo conditions and location occurs and these events are logged and timed and reported, using the tag 110 and the MTTS 100. Under normal conditions, the journey continues to the consignee, indicated by reference 310, and the cargo is ultimately unloaded, indicated by reference 312.

In the event of a cargo upset or alarm detected, for example by one or more of the cargo sensors attached to the interface 116, local communications of the tag 110 may be enabled at a state 316. As described above, local communications may be automatically enabled, in response to certain predefined conditions or alarm states, or under certain conditions, a predefined instruction received from a network may be needed to enable local communications, indicated by reference 310. In one example, this predefined instruction may originate from the MTTS shippers processing centre 114 or the MTTS security centre 112. Once local communications are enabled, local message communications may be authenticated at a state 318, for example by local emergency response personnel having wireless communications apparatus 120 communicating with the tag 110 using local radio communications. The authentication may involve one or more of communication authentication certificates 223 or passwords. Next, at a state 320, the tag cargo safety information (e.g., stored in the cargo information storage 221) and/or information related to conditions of the tag 110 or associated cargo may be communicated to the response personnel 120 using the local communications. The response personnel may then respond accordingly.

The present disclosure aims to provide rapid and timely access to safety information by responders to a transportation incident without the need to access remote databases and await response. The information may be available locally though the responder's existing communications equipment. The available information may also include the state of the cargo and hence may enable responders to taken effective corrective action on the most threatening materials first. This service may also enable the cargo container to directly communicate with appropriate local and national response teams automatically in the event of an upset.

The embodiments of the present disclosure described above are intended to be examples only. Those of skill in the art may effect alterations, modifications and variations to the particular embodiments without departing from the scope of the present disclosure as set out in the appended claims . In particular, selected features from one or more of the above-described embodiments may be combined to create alternative embodiments not explicitly described, features suitable for such combinations being readily apparent to persons skilled in the art. The subject matter described herein in the recited claims intends to cover and embrace all suitable changes in technology.

## Claims

1. A mobile tag tracking system (100) for providing mobile security monitoring, the system including:
a communications facility;
a communications network (104a, 104b) coupled to the communications facility; and
a mobile tag (110a, 110b) coupled to an item to be monitored, the mobile tag (110a, 110b) having:
a processor (204) having a memory and configured to control operation of the mobile tag (110a, 110b);
a radio communications component (206) coupled to the processor and providing wide area communications over the communications network and local communications access to a wireless device (120);
a power supply (202) coupled to the processor for providing power to the mobile tag (110a, 110b); and
a location tracking component (210) coupled to the processor for determining a location of the mobile tag (110a, 110b) and providing a location signal to the processor;
wherein in the event of an upset, the mobile tag (110a, 110b) is configured to send an alarm message on a local public safety agency, PSA, channel once unless receiving a command to repeat the alarm message, wherein the local PSA channel is selected based on the location of the mobile tag (110a, 110b);
wherein information about the item coupled to the tag (110a, 110b) is stored in the memory, and
wherein the mobile tag (110a, 110b) is configured to enable (316) local communications access between the mobile tag (110a, 110b) and the wireless device in response to an instruction received (310) at the mobile tag (110a, 110b).

2. The mobile tag tracking system according to claim 1, further comprising:
a communication authentication component (223) coupled to the processor of the mobile tag (110a, 110b) for authenticating the wireless device attempting to communicate with the mobile tag (110a, 110b) using the radio communications component.

3. The mobile tag tracking system according to claim 2, wherein authenticating the wireless device comprises an exchange of electronic credentials between the mobile tag (110a, 110b) and the wireless device.

4. The mobile tag tracking system according to claim 3, wherein the credentials comprise at least one of communication authentication certificates and passwords that are stored in the communication authentication component.

5. The mobile tag tracking system according to claim 4, wherein the communication authentication component comprises an allocation of the memory having said at least one of communication authentication certificates and a passwords stored therein.

6. The mobile tag tracking system according to any of the previous claims, wherein the mobile tag (110a, 110b) is further configured to:
send the information about the item from the mobile tag (110a, 110b) to the wireless device using the enabled local communications access.

7. The mobile tag tracking system according to claim 1, wherein the information comprises at least one of cargo content information and cargo safety information available for transmission to response personnel using the wireless device to communicate with the mobile tag (110a, 110b) using the local communications access.

8. The mobile tag tracking system according to claim 1, further comprising:
an interface connection (216) coupled to the processor for communicating with sensors attached to the item for sensing one or more conditions of cargo.

9. The mobile tag tracking system according to claim 8, wherein the conditions include at least one of: temperature of the cargo, pressure of the cargo, status of a transportation vehicle for the cargo, location of the mobile tag (110a, 110b), cargo code, safety precautions for the cargo, status of at least one of doors, access valves, and pressure relief valves of a container used to store the cargo.

10. The mobile tag tracking system according to any of the preceding claims, wherein the mobile tag (110a, 110b) is configured to:
determine (308) predefined conditions related to the item; and
enable (316) the local communications access between the mobile tag (110a, 110b) and the wireless device in response to the instruction received at the mobile tag (110a, 110b), after determining the predefined conditions.

11. The mobile tag tracking system according to claim 10, wherein the predefined conditions include at least one of: an upset to the item, a security breach to the item, and an alarm condition initiated by the mobile tag (110a, 110b).

12. A method (300) for providing information from a mobile tag (110a, 110b), coupled to an item to be monitored, to a wireless communications device (120) used by a local response team over a local communications network, the method including:
storing (304, 406), at the mobile tag (110a, 110b), information about the item;
in the event of an upset, sending from the mobile tag (110a, 110b) an alarm message on a local public safety agency, PSA, channel to alert the local response team, wherein the alarm message is sent once unless the mobile tag (110a, 110b) receives a command to repeat the alarm message, wherein the method further comprises selecting the local PSA channel based on a location of the mobile tag (110a, 110b); and
enabling (316) local communications access between the wireless communications device and the mobile tag (110a, 110b) in response to an instruction received (310) at the mobile tag (110a, 110b).

13. The method according to claim 12, wherein the instruction to enable the local communications access between the wireless communications device and the mobile tag (110a, 110b) is received over a wide area communications network from one of a shippers processing center (114) and a security center (112).

14. The method of claim 12, further comprising:
authenticating (318) the wireless communications device; and
sending (320) the information about the item from the mobile tag (110a, 110b) to the wireless communications device using the local communications network.

15. The method according to claim 14, wherein the step of sending (320) the information about the item from the mobile tag (110a, 110b) to the wireless communications device using the local communications network comprises sending at least one of synthesized speech and information packets over the PSA channel.

## Patentansprüche

1. Ein Verfolgungssystem (100) für mobile Tags zum Bereitstellen einer mobilen Sicherheitsüberwachung, wobei das System Folgendes umfasst:
eine Kommunikationseinrichtung;
ein Kommunikationsnetzwerk (104a, 104b), das mit der Kommunikationseinrichtung gekoppelt ist; und
ein mobiles Tag (110a, 110b), das mit einem zu überwachenden Objekt gekoppelt ist,
wobei das mobile Tag (110a, 110b) Folgendes aufweist:
einen Prozessor (204), der einen Speicher aufweist und konfiguriert ist, um den Betrieb des mobilen Tags (110a, 110b) zu steuern;
eine Funkkommunikationskomponente (206), die mit dem Prozessor gekoppelt ist und Weitbereichskommunikation über das Kommunikationsnetzwerk und Zugang für lokale Kommunikation zu einer drahtlosen Vorrichtung (120) bereitstellt;
eine Energieversorgung (202), die mit dem Prozessor gekoppelt ist, zum Bereitstellen von Energie für das mobile Tag (110a, 110b); und
eine Standortverfolgungskomponente (210), die mit dem Prozessor gekoppelt ist, zum Bestimmen eines Standorts des mobilen Tags (110a, 110b) und zum Bereitstellen eines Standortsignals für den Prozessor;
wobei im Fall einer Störung das mobile Tag (110a, 110b) konfiguriert ist, um eine Alarmnachricht auf einem lokalen Kanal einer Behörde für öffentliche Sicherheit, PSA, einmal zu senden, es sei denn, es wird ein Befehl zum Wiederholen der Alarmnachricht empfangen, wobei der lokale PSA-Kanal basierend auf dem Standort des mobilen Tags (110a, 110b) ausgewählt wird;
wobei Informationen über das Objekt, das mit dem Tag (110a, 110b) gekoppelt ist, in dem Speicher gespeichert sind und
wobei das mobile Tag (110a, 110b) konfiguriert ist, um Zugang für lokale Kommunikation zwischen dem mobilen Tag (110a, 110b) und der drahtlosen Vorrichtung als Reaktion auf eine an dem mobilen Tag (110a, 110b) empfangene Anweisung (310) zu ermöglichen (316).

2. Verfolgungssystem für mobile Tags gemäß Anspruch 1, das ferner Folgendes beinhaltet:
eine Kommunikationsauthentifizierungskomponente (223), die mit dem Prozessor des mobilen Tags (110a, 110b) gekoppelt ist, zum Authentifizieren der drahtlosen Vorrichtung, die versucht, mit dem mobilen Tag (110a, 110b) unter Verwendung der Funkkommunikationskomponente zu kommunizieren.

3. Verfolgungssystem für mobile Tags gemäß Anspruch 2, wobei das Authentifizieren der drahtlosen Vorrichtung einen Austausch von elektronischen Berechtigungsnachweisen zwischen dem mobilen Tag (110a, 110b) und der drahtlosen Vorrichtung beinhaltet.

4. Verfolgungssystem für mobile Tags gemäß Anspruch 3, wobei die Berechtigungsnachweise mindestens eines von Kommunikationsauthentifizierungszertifikaten und Passwörtern, die in der Kommunikationsauthentifizierungskomponente gespeichert sind, beinhalten.

5. Verfolgungssystem für mobile Tags gemäß Anspruch 4, wobei die Kommunikationsauthentifizierungskomponente eine Zuordnung des Speichers beinhaltet, die das mindestens eine von Kommunikationsauthentifizierungszertifikaten und Passwörtern darin gespeichert aufweist.

6. Verfolgungssystem für mobile Tags gemäß einem der vorhergehenden Ansprüche, wobei das mobile Tag (110a, 110b) ferner für Folgendes konfiguriert ist:
Senden der Informationen über das Objekt von dem mobilen Tag (110a, 110b) an die drahtlose Vorrichtung unter Verwendung des ermöglichten Zugangs für lokale Kommunikation.

7. Verfolgungssystem für mobile Tags gemäß Anspruch 1, wobei die Informationen mindestens eines von Frachtinhaltsinformationen und Frachtsicherheitsinformationen beinhalten, die zur Übertragung an Einsatzpersonal verfügbar sind, das die drahtlose Vorrichtung verwendet, um mit dem mobilen Tag (110a, 110b) unter Verwendung des Zugangs für lokale Kommunikation zu kommunizieren.

8. Verfolgungssystem für mobile Tags gemäß Anspruch 1, das ferner Folgendes beinhaltet:
eine Schnittstellenverbindung (216), die mit dem Prozessor gekoppelt ist, zum Kommunizieren mit Sensoren, die an dem Objekt angebracht sind, zum Erfassen eines oder mehrerer Frachtzustände.

9. Verfolgungssystem für mobile Tags gemäß Anspruch 8, wobei die Zustände mindestens eines von Folgendem umfassen: Temperatur der Fracht, Druck der Fracht, Status eines Transportfahrzeugs für die Fracht, Standort des mobilen Tags (110a, 110b), Frachtcode, Sicherheitsvorkehrungen für die Fracht, Status von mindestens einem von Türen, Zugangsventilen und Druckentlastungsventilen eines Behälters, der zum Lagern der Fracht verwendet wird.

10. Verfolgungssystem für mobile Tags gemäß einem der vorhergehenden Ansprüche, wobei das mobile Tag (110a, 110b) für Folgendes konfiguriert ist:
Bestimmen (308) vordefinierter Zustände in Bezug auf das Objekt; und
Ermöglichen (316) des Zugangs für lokale Kommunikation zwischen dem mobilen Tag (110a, 110b) und der drahtlosen Vorrichtung als Reaktion auf die an dem mobilen Tag (110a, 110b) empfangene Anweisung nach dem Bestimmen der vordefinierten Zustände.

11. Verfolgungssystem für mobile Tags gemäß Anspruch 10, wobei die vordefinierten Zustände mindestens eines von Folgendem umfassen: eine Störung an dem Objekt, eine Sicherheitsverletzung an dem Objekt und einen Alarmzustand, der durch das mobile Tag (110a, 110b) ausgelöst wird.

12. Ein Verfahren (300) zum Bereitstellen von Informationen von einem mobilen Tag (110a, 110b), das mit einem zu überwachenden Objekt gekoppelt ist, an eine drahtlose Kommunikationsvorrichtung (120), die von einem lokalen Einsatzteam über ein lokales Kommunikationsnetzwerk verwendet wird, wobei das Verfahren Folgendes umfasst:
Speichern (304, 406) von Informationen über das Objekt in dem mobilen Tag (110a, 110b);
im Fall einer Störung, Senden einer Alarmnachricht von dem mobilen Tag (110a, 110b) auf einem lokalen Kanal einer Behörde für öffentliche Sicherheit, PSA, um das lokale Einsatzteam zu alarmieren, wobei die Alarmnachricht einmal gesendet wird, es sei denn, das mobile Tag (110a, 110b) empfängt einen Befehl zum Wiederholen der Alarmnachricht, wobei das Verfahren ferner das Auswählen des lokalen PSA-Kanals basierend auf einem Standort des mobilen Tags (110a, 110b) beinhaltet; und
Ermöglichen (316) des Zugangs für lokale Kommunikation zwischen der drahtlosen Kommunikationsvorrichtung und dem mobilen Tag (110a, 110b) als Reaktion auf eine an dem mobilen Tag (110a, 110b) empfangene Anweisung (310).

13. Verfahren gemäß Anspruch 12, wobei die Anweisung zum Ermöglichen des Zugangs für lokale Kommunikation zwischen der drahtlosen Kommunikationsvorrichtung und dem mobilen Tag (110a, 110b) über ein Weitbereichskommunikationsnetzwerk von einem von einem Verarbeitungszentrum (114) eines Versenders und einem Sicherheitszentrum (112) empfangen wird.

14. Verfahren gemäß Anspruch 12, das ferner Folgendes beinhaltet:
Authentifizieren (318) der drahtlosen Kommunikationsvorrichtung; und
Senden (320) der Informationen über das Objekt von dem mobilen Tag (110a, 110b) an die drahtlose Kommunikationsvorrichtung unter Verwendung des lokalen Kommunikationsnetzwerks.

15. Verfahren gemäß Anspruch 14, wobei der Schritt des Sendens (320) der Informationen über das Objekt von dem mobilen Tag (110a, 110b) an die drahtlose Kommunikationsvorrichtung unter Verwendung des lokalen Kommunikationsnetzwerks das Senden von mindestens einem von synthetisierter Sprache und Informationspaketen über den PSA-Kanal beinhaltet.

## Revendications

1. Un système de suivi d'étiquette mobile (100) pour fournir une surveillance de sécurité mobile, le système incluant :
une installation de communications ;
un réseau de communications (104a, 104b) couplé à l'installation de communications ;
et
une étiquette mobile (110a, 110b) couplée à un article à surveiller, l'étiquette mobile (110a, 110b) ayant :
un processeur (204) ayant une mémoire et configuré pour contrôler le fonctionnement de l'étiquette mobile (110a, 110b) ;
une composante de communications radio (206) couplée au processeur et fournissant des communications étendues sur le réseau de communications et un accès de communications local à un dispositif sans fil (120) ;
un bloc d'alimentation (202) couplé au processeur pour fournir de l'alimentation électrique à l'étiquette mobile (110a, 110b) ; et
une composante de suivi de localisation (210) couplée au processeur pour déterminer une localisation de l'étiquette mobile (110a, 110b) et fournir un signal de localisation au processeur ;
dans lequel, en cas de perturbation, l'étiquette mobile (110a, 110b) est configurée pour envoyer un message d'alarme sur un canal d'agence de sécurité publique, PSA, local une fois à moins de recevoir une commande de répéter le message d'alarme, le canal PSA local étant sélectionné sur la base de la localisation de l'étiquette mobile (110a, 110b) ;
dans lequel des informations concernant l'article couplé à l'étiquette (110a, 110b) sont stockées dans la mémoire, et
dans lequel l'étiquette mobile (110a, 110b) est configurée pour activer (316) un accès de communications local entre l'étiquette mobile (110a, 110b) et le dispositif sans fil en réponse à une instruction reçue (310) au niveau de l'étiquette mobile (110a, 110b).

2. Le système de suivi d'étiquette mobile selon la revendication 1, comprenant en outre :
une composante d'authentification de communication (223) couplée au processeur de l'étiquette mobile (110a, 110b) pour authentifier le dispositif sans fil tentant de communiquer avec l'étiquette mobile (110a, 110b) en utilisant la composante de communications radio.

3. Le système de suivi d'étiquette mobile selon la revendication 2, dans lequel l'authentification du dispositif sans fil comprend un échange de justificatifs d'identité électroniques entre l'étiquette mobile (110a, 110b) et le dispositif sans fil.

4. Le système de suivi d'étiquette mobile selon la revendication 3, dans lequel les justificatifs d'identité comprennent des certificats d'authentification de communication ou des mots de passe, ou des certificats d'authentification de communication et des mots de passe, qui sont stockés dans la composante d'authentification de communication.

5. Le système de suivi d'étiquette mobile selon la revendication 4, dans lequel la composante d'authentification de communication comprend une allocation de la mémoire ayant lesdits certificats d'authentification de communication ou mots de passe, ou lesdits certificats d'authentification de communication et mots de passe stockés dans celle-ci.

6. Le système de suivi d'étiquette mobile selon n'importe lesquelles des revendications précédentes, dans lequel l'étiquette mobile (110a, 110b) est en outre configurée pour : envoyer les informations concernant l'article de l'étiquette mobile (110a, 110b) au dispositif sans fil en utilisant l'accès de communications local activé.

7. Le système de suivi d'étiquette mobile selon la revendication 1, dans lequel les informations comprennent au moins un type d'informations parmi des informations de contenu de cargaison et des informations de sécurité de cargaison disponibles pour une transmission à un personnel d'intervention utilisant le dispositif sans fil pour communiquer avec l'étiquette mobile (110a, 110b) en utilisant l'accès de communications local.

8. Le système de suivi d'étiquette mobile selon la revendication 1, comprenant en outre : une connexion d'interface (216) couplée au processeur pour communiquer avec des capteurs attachés à l'article pour détecter un ou plusieurs états de cargaison.

9. Le système de suivi d'étiquette mobile selon la revendication 8, dans lequel les états incluent au moins un état parmi : la température de la cargaison, la pression de la cargaison, un statut d'un véhicule de transport pour la cargaison, la localisation de l'étiquette mobile (110a, 110b), un code de cargaison, des précautions de sécurité pour la cargaison, un statut d'au moins un élément parmi des portes, des soupapes d'accès et des soupapes de sécurité d'un conteneur utilisé pour stocker la cargaison.

10. Le système de suivi d'étiquette mobile selon n'importe lesquelles des revendications précédentes, dans lequel l'étiquette mobile (110a, 110b) est configurée pour :
déterminer (308) des états prédéfinis liés à l'article ; et
activer (316) l'accès de communications local entre l'étiquette mobile (110a, 110b) et le dispositif sans fil en réponse à l'instruction reçue au niveau de l'étiquette mobile (110a, 110b), après la détermination des états prédéfinis.

11. Le système de suivi d'étiquette mobile selon la revendication 10, dans lequel les états prédéfinis incluent au moins un état parmi : une perturbation de l'article, une violation de sécurité de l'article, et un état d'alarme amorcé par l'étiquette mobile (110a, 110b).

12. Un procédé (300) pour fournir des informations à partir d'une étiquette mobile (110a, 110b), couplée à un article à surveiller, à un dispositif de communications sans fil (120) utilisé par une équipe d'intervention locale sur un réseau de communications local, le procédé incluant :
le stockage (304, 406), au niveau de l'étiquette mobile (110a, 110b), d'informations concernant l'article ;
en cas de perturbation, l'envoi à partir de l'étiquette mobile (110a, 110b) d'un message d'alarme sur un canal d'agence de sécurité publique, PSA, local pour alerter l'équipe d'intervention locale, le message d'alarme étant envoyé une fois à moins que l'étiquette mobile (110a, 110b) ne reçoive une commande de répéter le message d'alarme, le procédé comprenant en outre la sélection du canal PSA local sur la base d'une localisation de l'étiquette mobile (110a, 110b) ; et
l'activation (316) d'un accès de communications local entre le dispositif de communications sans fil et l'étiquette mobile (110a, 110b) en réponse à une instruction reçue (310) au niveau de l'étiquette mobile (110a, 110b).

13. Le procédé selon la revendication 12, dans lequel l'instruction d'activer l'accès de communications local entre le dispositif de communications sans fil et l'étiquette mobile (110a, 110b) est reçue sur un réseau de communications étendu à partir d'un centre parmi un centre de traitement d'expédition (114) et un centre de sécurité (112).

14. Le procédé de la revendication 12, comprenant en outre :
l'authentification (318) du dispositif de communications sans fil ; et
l'envoi (320) des informations concernant l'article de l'étiquette mobile (110a, 110b) au dispositif de communications sans fil en utilisant le réseau de communications local.

15. Le procédé selon la revendication 14, dans lequel l'étape d'envoi (320) des informations concernant l'article de l'étiquette mobile (110a, 110b) au dispositif de communications sans fil en utilisant le réseau de communications local comprend l'envoi d'au moins l'un de paquets de parole et d'informations synthétisés sur le canal PSA.
